# EUROPEAN PATENT APPLICATION

(11) **EP 2 905 517 A1**
(43) Date of publication of application: **12.08.2015**
(21) Application number: 13843166.3
(22) Date of filing: 25.09.2013
(51) Int. Cl.: F16J 15/18, F16J 15/24

(54) **SEALING DEVICE**

(30) Priority: 03.10.2012 JP 2012220956
(71) Applicant: NOK Corporation, Minato-ku Tokyo 105-8585 (JP)
(72) Inventor: MONMA Hiroaki, Kitaibaraki-shi Ibaraki 319-1535 (JP)
(74) Representative: TBK
(86) International application number: PCT/JP2013/075794
(87) International publication number: WO 2014/054472

(57) **Abstract**

The objective of the present invention is to provide a sealing device equipped with a resin seal ring and a spring means, wherein the seal ring does not easily deform in the inner circumferential direction when pressure is applied, and thus a gap does not easily occur and the sealing performance can be improved. To achieve this objective this sealing device, which is mounted in a mounting groove provided in one of two members that move relative to one another, and which makes close contact with the other member and the side walls of the mounting groove, thereby providing a seal between the two members, has: a seal ring, the tubular end part of which is provided with a radial part, with the outer circumferential surface of the tubular part making close contact with the other member and the end surface of the radial part making close contact with the side walls of the mounting groove; a support ring, which is manufactured with a hard material such as metal, and which has a region that makes contact with the inner circumferential surface of the tubular part and a region that makes contact with the other end surface of the radial part in the axial direction; and a spring means that presses against the support ring and the seal ring. The support ring has the function of supporting the tubular part of the seal ring from the inner circumferential side thereof.

## Description

### BACKGROUND OF THE INVENTION

### Field of the Invention

The present invention relates to a sealing device according to a seal technology. The sealing device according to the present invention is used in a hydraulic and pneumatic device, for example, involving a rotation movement, an oscillating movement or a reciprocating movement, or is used in various devices which require a sealing device for rotating use, oscillating use or reciprocating use.

### Description of the Conventional Art

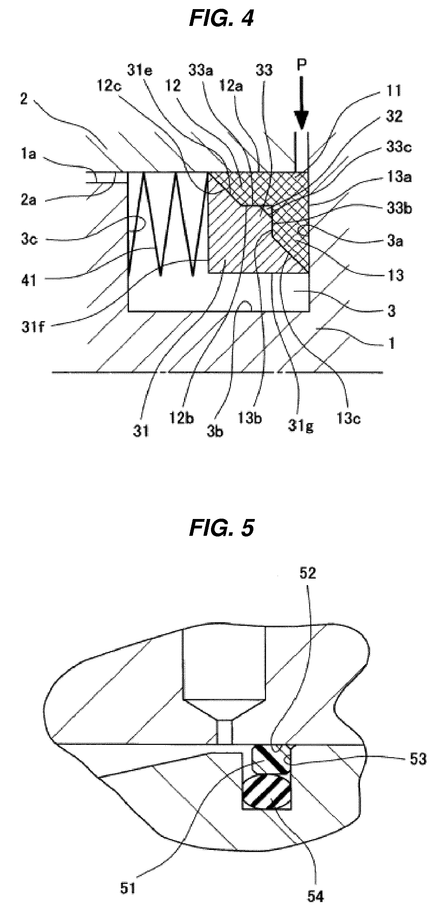

A sealing device shown in Fig. 5 has been known as a sealing device for rotation, oscillation or reciprocation, and the sealing device uses a spring means 54 constructed by a rubber ring such as an O-ring together for generating a seal surface pressure by pressing a seal ring 51 made of a resin such as PTFE to the opposing seal surfaces 52 and 53 (refer to patent document 1).

However, in the case that a rigidity in a circumferential direction of the seal ring 51 is inferior or in the case that a pressing force by the spring means 54 is short, the seal ring 51 deforms in an inner peripheral direction in some magnitude of a pressure (a sealing fluid pressure) acting on an outer peripheral portion of the seal ring 51, a gap is generated in an outer peripheral side of the seal ring 51, the gap forms a leakage path, and the pressure may leak.

### PRIOR ART DOCUMENTS

### Patent Documents

Patent Document 1: Japanese Unexamined Patent Publication No. 11-78851
Patent Document 2: Japanese Unexamined Patent Publication No. 8-193603
Patent Document 3: Japanese Patent No. 3403694

### SUMMARY OF THE INVENTION

### Problem to be Solved by the Invention

The present invention is made by taking the above points into consideration, and an object of the present invention is to provide a sealing device having a seal ring made of a resin and a spring means, in which the seal ring is hard to deform in an inner peripheral direction even by an application of the pressure, whereby a gap is hard to be generated, and a sealing performance can be improved.

### Means for Solving the Problem

In order to achieve the object mentioned above, a sealing device according to a first aspect of the present invention is a sealing device sealing between relatively moving two members by being installed to an installation groove which is provided in an outer peripheral surface of one member among the two members and coming into close contact with the other member which is positioned in an outer peripheral side of the installation groove and one side wall of the installation groove, the sealing device comprising:
a seal ring which is provided with a diametrical portion in one end portion in an axial direction of a tubular portion toward an inner side in a diametrical direction, comes into close contact with one side wall of the installation groove by one end surface in an axial direction of the diametrical portion as well as coming into close contact with the other member by an outer peripheral surface of the tubular portion, and is made of a resin;
a support ring which is provided with a position coming into contact with an inner peripheral surface of the tubular portion and a position coming into contact with the other end surface in the axial direction of the diametrical portion, is combined with the seal ring and is constructed by a rigid member such as a metal; and
a spring means which presses the support ring and the seal ring,
wherein the support ring has a function of supporting the tubular portion of the seal ring from an inner peripheral side thereof.

Further, a sealing device according to a second aspect of the present invention is the sealing device described in the first aspect mentioned above, wherein the spring means is constructed by a rubber ring or a metal spring.

The sealing device according to the present invention having the structure mentioned above has the support ring constructed by the rigid member such as the metal in addition to the seal ring made of the resin and the spring means. The seal ring made of the resin is provided with the diametrical portion in the one end portion in the axial direction of the tubular portion toward the inner side in the diametrical direction, thereby being formed into a half-cut L-shaped cross sectional shape or an approximately L-shaped form. The support ring constructed by the rigid member such as the metal is provided with the position which comes into contact with the inner peripheral surface of the tubular portion of the seal ring and the position which comes into contact with the other end surface in the axial direction of the diametrical portion, and is combined with the seal ring. Therefore, since at least a part of the support ring is arranged in the inner peripheral side of the tubular portion of the seal ring and the function of supporting the tubular portion from the inner peripheral side thereof is achieved, the seal ring is inhibited from deforming in the inner peripheral direction even by the application of the pressure. The spring means is structured such as to press the support ring and the seal ring toward the opposing seal surface. Specifically, a rubber ring or a metal spring is preferably employed.

### Effect of the Invention

The present invention achieves the following effects.

More specifically, in the present invention, since the function that the support ring constructed by the rigid member such as the metal supports the tubular portion of the seal ring made of the resin from the inner peripheral side thereof is achieved as described above, it is possible to inhibit the seal ring from deforming in the inner peripheral direction even by the application of the pressure. Therefore, a gap is hard to be generated in the outer peripheral side of the seal ring, and it is possible to improve the sealing performance.

### BRIEF EXPLANATION OF THE DRAWINGS

Fig. 1A is a half-cut cross sectional view of a sealing device according to a comparative example;
Fig. 1B is a half-cut cross sectional view showing a defect generation state therein;
Fig. 2 is a half-cut cross sectional view of a sealing device according to a first embodiment of the present invention;
Fig. 3A is a half-cut cross sectional view of a sealing device according to a comparative example;
Fig. 3B is a half-cut cross sectional view showing a defect generation state therein;
Fig. 4 is a half-cut cross sectional view of a sealing device according to a second embodiment of the present invention; and
Fig. 5 is a half-cut cross sectional view of a sealing device according to a prior art.

### DETAILED DESCRIPTION OF PREFERRED EMBODIMENTS

The following embodiments are included in the present invention.
(1)
   (1-1) Since there is a limit to secure a pressing force of the spring means (which may be also called as a load ring) such as the rubber ring or the metal spring playing a role in pressing the resin seal ring to the opposing surface, the seal ring is inhibited from being deformed in an inner peripheral direction with the pressure by forming the seal ring into an L-shaped cross section and adding a support ring constructed by a rigid member such as a metal to an inner side of the L-shaped portion, thereby achieving the reservation of the sealing performance.
   (1-2) In the case (1-1) mentioned above, the seal ring is brought into close contact with the opposing surface like a wedge by forming the support ring into a trapezoidal cross section and coming into contact with the rubber ring by the taper shape, thereby achieving the reservation of the sealing performance. In this case, it is preferable to employ a support ring which is partly cut circumferentially.
   (1-3) In the case (1-2) mentioned above, the support ring presses the seal ring like a wedge without hitting with the repulsive force of the rubber ring by setting a corner contact position of the seal ring and the support ring to a gap (a space), thereby achieving the reservation of the sealing performance.
(2)
   (2-1) Since there is a limit to secure a pressing force of the spring means (which may be also called as a load ring) such as the rubber ring or the metal spring playing a role in pressing the resin seal ring to the opposing surface, the seal ring is inhibited from being deformed in an inner peripheral direction with the pressure of a convex shape by forming the seal ring into an L-shaped cross section and adding a support ring having the convex shape to an inner side of the L-shaped portion, thereby achieving the reservation of the sealing performance.
   (2-2) In the case (2-1) mentioned above, the support ring is not exposed to the restriction (the hitting) when the support ring presses the seal ring like a wedge, by the provision of a gap (a space) at a corner contact position of the seal ring and the support ring.
(3) The seal ring and the support ring in the present invention can be applied regardless of the provision of the cut, and the same effect can be obtained.

### Embodiments

Next, a description will be given of embodiments according to the present invention with reference to the accompanying drawings.

### First embodiment

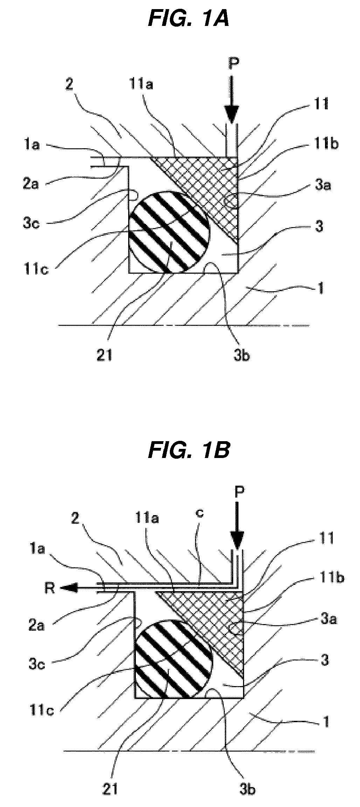

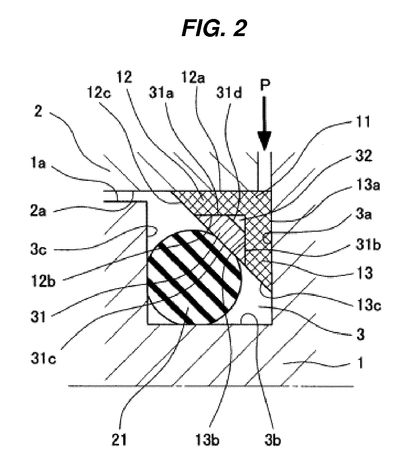

Fig. 1 shows a sealing device according to a comparative example. On the contrary, Fig. 2 shows a sealing device according to a first embodiment of the present invention.

The sealing device according to the comparative example shown in Fig. 1A is structured as follows.

More specifically, the sealing device is structured such as to seal between two members 1 and 2 by being installed to an annular installation groove 3 which is provided in an outer peripheral surface 1 a of one member 1 among the two members 1 and 2 relatively moving (relatively rotating or relatively oscillating) and coming into close contact with the other member 2 which is positioned in an outer peripheral side of the installation groove 3 and one side wall 3a of the installation groove 3, and has a seal ring 11 which is made of a resin such as PTFE, and a rubber ring 21 which serves as a spring means, as its constructing elements. The installation groove 3 is formed into a half-cut rectangular cross sectional shape.

The seal ring 11 is provided with an outer peripheral surface 11 a which is formed into a cylindrical surface shape, an end surface 11 b which is formed into an axially vertical plane shape and is provided in one side in an axial direction, and an inner peripheral surface 11c which is formed into a taper surface shape, is formed into a half-cut triangular cross sectional shape, and comes into close contact with the one side wall 3a of the installation groove 3 with the axially one end surface 11 b as well as slidably coming into close contact with the inner peripheral surface 2a of the other member 2 by the outer peripheral surface 11a.

The rubber ring 21 is formed into a half-cut circular O-ring cross sectional shape, is interposed in a compressed state between the inner peripheral surface 11 c of the seal ring 11, and a bottom wall 3b and the other side wall 3c of the installation groove 3, and presses the seal ring 11 to the inner peripheral surface 2a of the other member 2 and the one side wall 3a of the installation groove 3 with a repulsive force.

According to the comparative example, when a pressure (a sealed fluid pressure) P is applied to the seal ring 11 from an outer peripheral side thereof, the seal ring 11 deforms in an inner peripheral direction as shown in Fig. 1B, a gap c in a diametrical direction is generated between the outer peripheral surface 11 a of the seal ring 11 and the inner peripheral surface 2a of the other member 2, and there is a risk that the gap c forms a leakage path R and the pressure P leaks.

In the sealing device according to the first embodiment shown in Fig. 2, the following countermeasure is adopted.

More specifically, the seal ring 11 which is formed into the half-cut triangular cross sectional shape and is made of the resin in the comparative example is formed into a half-cut L-shaped cross sectional shape or an approximately L-shaped form which is integrally provided with a diametrical portion 13 toward a diametrically inner side in one end portion in an axial direction of the tubular portion 12, and a support ring 31 constructed by a rigid member such as a metal is assembled in an inner peripheral side of the tubular portion 12.

The tubular portion 12 of the seal ring 11 is provided with an outer peripheral surface 12a which is formed into a cylindrical surface shape, an inner peripheral surface 12b which is formed into a cylindrical surface shape in the same manner, and the other end surface 12c in an axial direction which is formed into a taper surface shape, and slidably comes into close contact with the inner peripheral surface 2a of the other member 2 by the outer peripheral surface 12a. A seal surface pressure in the close contact portion is appropriately set by an initial fitting margin of the tubular portion 12 to the other member 2, or is appropriately set by the assembly of the support ring 31 in the inner peripheral side of the tubular portion 12 and the enlargement of the diameter of the tubular portion. The other end surface 12c in the axial direction may not be formed into the taper surface shape, but may be formed, for example, into an axially vertical plane shape.

The diametrical portion 13 of the seal ring 11 is provided with one end surface 13a in an axial direction which is formed into an axially vertical plane shape, the other end surface 13b in the axial direction which is formed into an axially vertical plane shape in the same manner, and an inner peripheral surface 13c which is formed into a taper surface shape, and comes into close contact with the one side wall 3a of the installation groove 3 by the one end surface 13a in the axial direction. A seal surface pressure in the close contact portion is appropriately set by the pressing of the diametrical portion 13 toward the one side in the axial direction by the rubber ring 21 via the support ring 31. The inner peripheral surface 13c may not be formed into the taper surface shape, but may be formed, for example, into a cylindrical surface shape.

The support ring 31 is provided with an outer peripheral surface 31 a which is formed into a cylindrical surface shape, one end surface 31 b in an axial direction which is formed into an axially vertical plane shape, and an inner peripheral surface 31 c which is formed into a taper surface shape, is further provided between one end portion in the axial direction of the outer peripheral surface 31 a and an outer peripheral end portion of the end surface 31 b with a chamfer portion 31 d which is in parallel to the inner peripheral surface 31 c and is formed into a taper surface shape so as to be formed into a half-cut trapezoidal cross sectional shape or an approximately trapezoidal shape, and comes into close contact with the other end surface 13b in the axial direction of the diametrical portion 13 of the seal ring 11 by the one end surface 31 b in the axial direction as well as coming into close contact with the inner peripheral surface 12b of the tubular portion 12 of the seal ring 11 by the outer peripheral surface 31 a. Therefore, in the embodiment, the outer peripheral surface 31 a of the support ring 31 constitutes "a position coming into contact with an inner peripheral surface of the tubular portion" stated in claim 1, and the one end surface 31 b in the axial direction of the support ring 31 constitutes "a position coming into contact with the other end surface in the axial direction of the diametrical portion" stated in claim 1.

The rubber ring 21 is formed into a half-cut circular O-ring cross sectional shape, is interposed in a compressed state between the inner peripheral surface 31 c of the support ring 31, and the bottom wall 3b and the other side wall 3c of the installation groove 3, presses the support ring 31 by a repulsive force thereof, and presses the seal ring 11 via the support ring 31. In the case that a filling rate of the rubber ring 21 is great in relation to the space capacity of the installation groove 3, the rubber ring 21 comes into contact with not only the inner peripheral surface 31 c of the support ring 31 but also the other end surface 12c in the axial direction of the tubular portion 12 of the seal ring and/or the inner peripheral surface 13c of the diametrical portion 13 in the seal ring 11, and may directly press these surfaces.

In the sealing device having the structure mentioned above, since the support ring 31 constructed by the rigid member such as the metal is assembled in the inner peripheral side of the tubular portion 12 of the seal ring 11 made of the resin, there is achieved the function that the support ring 31 supports the tubular portion 12 of the seal ring 11 from the inner peripheral side thereof. Therefore, even in the case that the pressure (the sealed fluid pressure) P acts on the seal ring 11 from the outer peripheral side thereof, the seal ring 11 is hard to deform in the inner peripheral direction, and the gap in the diametrical direction is hard to be generated between the outer peripheral surface 11 a of the seal ring 11 and the inner peripheral surface 2a of the other member 2. Accordingly, it is possible to suppress the leakage of the pressure P having the gap as the leakage path.

As an aspect of the support ring 31 mentioned above, it can be thought to use a structure in which the ring is partly cut circumferentially and the diameter can be enlarged. In this case, since the support ring 31 presses the diametrical portion 13 of the seal ring 11 to the one side wall 3a of the installation groove 3 and presses the tubular portion 12 of the seal ring 11 to the inner peripheral surface 2a of the other member 2 while being exposed to the repulsive force of the rubber 21, a wedge action caused by the combination of the axial pressing force and the diametrical pressing force can be achieved.

Further, in this case, there is a risk that the support ring 31 eats into the corner portion where the other end surface 13b in the axial direction of the diametrical portion 13 intersects the inner peripheral surface 12b of the tubular portion 12 in the seal ring 11 on the basis of the wedge action mentioned above, thereby damaging the seal ring 11. However, since the chamfer portion 31 d is provided in the shoulder portion of the support ring 31 as mentioned above in the sealing device, the support ring 31 does not come into contact with the corner portion. Therefore, the support ring 31 does not eat into the corner portion and damage the seal ring 11. Between the corner portion and the chamfer portion 31 d, there is formed an annular space portion 32 which is surrounded by the inner peripheral surface 12b of the tubular portion 12 in the seal ring 11, the other end surface 13b in the axial direction of the diametrical portion 13 and the chamfer portion 31 d, and is formed into a half-cut triangular cross sectional shape.

Further, the following description can be added to the sealing device according to the first embodiment mentioned above.
(1) The diametrical thickness ((outer diameter - inner diameter)/2) of the tubular portion 12 in the seal ring 11 is preferably set to a range between 20 and 30 % of the diametrical distance between the bottom wall 3b of the installation groove 3 and the inner peripheral surface 2a of the other member 2.
(2) The axial width of the seal ring 11 is preferably set to a range between 90 and 100 % of the axial width of the installation groove 3.
(3) The diametrical distance between the outer peripheral surface 12a of the tubular portion 12 in the seal ring 11 and the inner peripheral end portion of the other end surface 13b in the axial direction of the diametrical portion 13 is preferably set to a range between 40 and 60 % of the diametrical distance between the bottom wall 3b of the installation groove 3 and the inner peripheral surface 2a of the other member 2.
(4) The axial width of the support ring 31 and the diametrical width ((outer diameter - inner diameter)/2) of the support ring 31 are preferably equal to each other. Further, these dimensions are preferably set to a range between 30 and 50 % of the axial width of the installation groove 3.
(5) The diametrical width ((outer diameter - inner diameter)/2) of the rubber ring 21 is preferably set to a range between 60 and 80 % of the diametrical distance between the bottom wall 3b of the installation groove 3 and the inner peripheral surface 2a of the other member 2.
(6) A taper inclination angle in relation to the center axis of the sealing device is preferably 45 degree in each of the other end surface 12c in the axial direction of the tubular portion 12 in the seal ring 11, the inner peripheral surface 13c of the diametrical portion 13 in the seal ring 11 and the inner peripheral surface 31 c of the support ring 31 which are formed into the taper surface shape. Further, these three surfaces may be arranged on the same surface in an initial setting.
(7) The material of the rubber ring 21 may employ any materials, for example, NBR, FKM and EPDM as long as the material is the rubber-like elastic material.

### Second embodiment

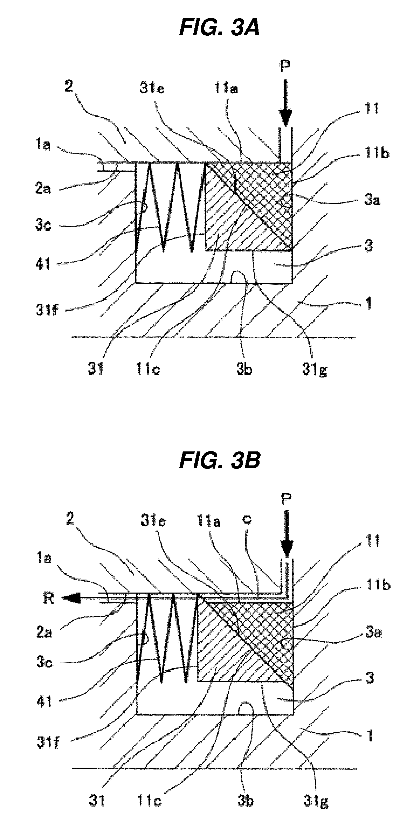

Fig. 3 shows a sealing device according to a comparative example. On the contrary, Fig. 4 shows a sealing device according to a second embodiment of the present invention.

The sealing device according to the comparative example shown in Fig. 3A is structured as follows.

More specifically, the sealing device is structured such as to seal between two members 1 and 2 by being installed to an annular installation groove 3 which is provided in an outer peripheral surface 1 a of one member 1 among the two members 1 and 2 relatively moving (relatively rotating or relatively oscillating) and coming into close contact with the other member 2 which is positioned in an outer peripheral side of the installation groove 3 and one side wall 3a of the installation groove 3, and has a seal ring 11 which is made of a resin such as PTFE, a support ring 31 which is constructed by a rigid member such as a metal, and a metal spring 41 which serves as a spring means, as its constructing elements. The installation groove 3 is formed into a half-cut rectangular cross sectional shape.

The seal ring 11 is provided with an outer peripheral surface 11 a which is formed into a cylindrical surface shape, an end surface 11 b which is formed into an axially vertical plane shape and is provided in one side in an axial direction, and an inner peripheral surface 11c which is formed into a taper surface shape, is formed into a half-cut triangular cross sectional shape, and comes into close contact with the one side wall 3a of the installation groove 3 with the axially one end surface 11 b as well as slidably coming into close contact with the inner peripheral surface 2a of the other member 2 by the outer peripheral surface 11a.

The support ring 31 is provided with an outer peripheral surface 31 e which is formed into a taper surface shape, the other end surface 31 f in an axial direction which is formed into an axially vertical plane shape, and an inner peripheral surface 31 g which is formed into a cylindrical surface shape so as to be formed into a half-cut triangular cross sectional shape, and slidably comes into close contact with the inner peripheral surface 11 c of the seal ring 11 by the outer peripheral surface 31 e.

The metal spring 41 is formed into a coil shape, is interposed in a compressed state between the other end surface 31 f in the axial direction of the support ring 31 and the other side wall 3c of the installation groove 3, and presses the seal ring 11 to the inner peripheral surface 2a of the other member 2 and the one side wall 3a of the installation groove 3 via the support ring 31 as well as pressing the support ring 31 by a repulsive force thereof. A plurality of metal springs 41 are uniformly arranged on the circumference of the sealing device.

According to the comparative example, when a pressure (a sealed fluid pressure) P is applied to the seal ring 11 from an outer peripheral side thereof, the seal ring 11 deforms in an inner peripheral direction as shown in Fig. 3B, a gap c in a diametrical direction is generated between the outer peripheral surface 11 a of the seal ring 11 and the inner peripheral surface 2a of the other member 2, and there is a risk that the gap c forms a leakage path R and the pressure P leaks.

In the sealing device according to the second embodiment shown in Fig. 4, the following countermeasure is adopted.

More specifically, the seal ring 11 which is formed into the half-cut triangular cross sectional shape and is made of the resin in the comparative example is formed into a half-cut L-shaped cross sectional shape or an approximately L-shaped form which is integrally provided with a diametrical portion 13 toward a diametrically inner side in one end portion in an axial direction of the tubular portion 12, and a projection portion 33 provided in the outer peripheral surface 31e of the support ring 31 is assembled in an inner peripheral side of the tubular portion 12.

The tubular portion 12 of the seal ring 11 is provided with an outer peripheral surface 12a which is formed into a cylindrical surface shape, an inner peripheral surface 12b which is formed into a cylindrical surface shape in the same manner, and the other end surface 12c in an axial direction which is formed into a taper surface shape, and slidably comes into close contact with the inner peripheral surface 2a of the other member 2 by the outer peripheral surface 12a. A seal surface pressure in the close contact portion is appropriately set by an initial fitting margin of the tubular portion 12 to the other member 2, or is appropriately set by the assembly of the support ring 31 in the inner peripheral side of the tubular portion 12 and the enlargement of the diameter of the tubular portion.

On the other hand, the diametrical portion 13 of the seal ring 11 is provided with one end surface 13a in an axial direction which is formed into an axially vertical plane shape, the other end surface 13b in the axial direction which is formed into an axially vertical plane shape in the same manner, and an inner peripheral surface 13c which is formed into a taper surface shape, and comes into close contact with the one side wall 3a of the installation groove 3 by the one end surface 13a in the axial direction. A seal surface pressure in the close contact portion is appropriately set by the pressing of the diametrical portion 13 toward the one side in the axial direction by the metal spring 41 via the support ring 31.

The support ring 31 is provided with an outer peripheral surface 31 e which is formed into a taper surface shape, the other end surface 31 f in an axial direction which is formed into an axially vertical plane shape, and an inner peripheral surface 31 g which is formed into a cylindrical surface shape so as to be formed into a half-cut triangular cross sectional shape, and is further provided with an annular projection portion 33 in the outer peripheral surface 31 e. The projection portion 33 is provided with an outer peripheral surface 33a which is formed into a cylindrical surface shape and one end surface 33b in an axial direction which is formed into an axially vertical plane shape, is further provided between one end portion in the axial direction of the outer peripheral surface 33a and an outer peripheral end portion of the end surface 33b with a chamfer portion 33c which is in parallel to the outer peripheral surface 31e of the support ring 31 and is formed into a taper surface shape so as to be formed into a half-cut trapezoidal cross sectional shape or an approximately trapezoidal shape, and comes into close contact with the other end surface 13b in the axial direction of the diametrical portion 13 of the seal ring 11 by the one end surface 33b in the axial direction as well as coming into close contact with the inner peripheral surface 12b of the tubular portion 12 of the seal ring 11 by the outer peripheral surface 33a. Therefore, in the embodiment, the outer peripheral surface 33a of the projection portion 33 constitutes "a position coming into contact with an inner peripheral surface of the tubular portion" stated in claim 1, and the one end surface 33b in the axial direction of the projection portion 33 constitutes "a position coming into contact with the other end surface in the axial direction of the diametrical portion" stated in claim 1.

The metal spring 41 is formed into a coil shape, is interposed in a compressed state between the other end surface 31 f in the axial direction of the support ring 31 and the other side wall 3c of the installation groove 3, presses the support ring 31 by the repulsive force thereof, and presses the seal ring 11 via the support ring 31.

In the sealing device having the structure mentioned above, since the projection portion 33 of the support ring 31 constructed by the rigid member such as the metal is assembled in the inner peripheral side of the tubular portion 12 of the seal ring 11 made of the resin, there is achieved the function that the projection portion 33 of the support ring 31 supports the tubular portion 12 of the seal ring 11 from the inner peripheral side thereof. Therefore, even in the case that the pressure (the sealed fluid pressure) P acts on the seal ring 11 from the outer peripheral side thereof, the seal ring 11 is hard to deform in the inner peripheral direction, and the gap in the diametrical direction is hard to be generated between the outer peripheral surface 11 a of the seal ring 11 and the inner peripheral surface 2a of the other member 2. Accordingly, it is possible to suppress the leakage of the pressure P having the gap as the leakage path.

As an aspect of the support ring 31 mentioned above, it can be thought to use a structure in which the ring is partly cut circumferentially and the diameter can be enlarged. In this case, since the support ring 31 presses the diametrical portion 13 of the seal ring 11 to the one side wall 3a of the installation groove 3 and presses the tubular portion 12 of the seal ring 11 to the inner peripheral surface 2a of the other member 2 by the repulsive force of the metal spring 41, a wedge action caused by the combination of the axial pressing force and the diametrical pressing force can be achieved.

Further, in this case, there is a risk that the projection portion 33 of the support ring 31 eats into the corner portion where the other end surface 13b in the axial direction of the diametrical portion 13 intersects the inner peripheral surface 12b of the tubular portion 12 in the seal ring 11 on the basis of the wedge action mentioned above, thereby damaging the seal ring 11. However, since the chamfer portion 33c is provided in the shoulder portion of the projection portion 33 of the support ring 31 as mentioned above in the sealing device, the support ring 31 does not come into contact with the corner portion. Therefore, the support ring 31 does not eat into the corner portion and damage the seal ring 11. Between the corner portion and the chamfer portion 33c, there is formed an annular space portion 32 which is surrounded by the inner peripheral surface 12b of the tubular portion 12 in the seal ring 11, the other end surface 13b in the axial direction of the diametrical portion 13 and the chamfer portion 33c, and is formed into a half-cut triangular cross sectional shape.

In common between the sealing devices according to the first and second embodiments, the material of the seal ring 11 made of the resin may employ a hard resin such as a nylon in addition to the PTFE.

### Description of Reference Numerals

1 one member
1 a, 11 a, 12a, 31 a, 31 e, 33a outer peripheral surface
2 other member
2a, 11 c, 12b, 13c, 31 c, 31 g inner peripheral surface
3 installation groove
3a, 3c side wall
3b bottom wall
11 seal ring
11 b, 12c, 13a, 13b, 31 b, 31 f, 33b end surface
12 tubular portion
13 diametrical portion
21 rubber ring (spring means)
31 support ring
31d, 33c end surface portion
32 space portion
33 projection portion
41 metal spring (spring means)

## Claims

1. A sealing device sealing between relatively moving two members by being installed to an installation groove which is provided in an outer peripheral surface of one member among the two members and coming into close contact with the other member which is positioned in an outer peripheral side of said installation groove and one side wall of said installation groove, the sealing device comprising:
a seal ring which is provided with a diametrical portion in one end portion in an axial direction of a tubular portion toward an inner side in a diametrical direction, comes into close contact with one side wall of said installation groove by one end surface in an axial direction of said diametrical portion as well as coming into close contact with said other member by an outer peripheral surface of said tubular portion, and is made of a resin;
a support ring which is provided with a position coming into contact with an inner peripheral surface of said tubular portion and a position coming into contact with the other end surface in the axial direction of said diametrical portion, is combined with said seal ring and is constructed by a rigid member such as a metal; and
a spring means which presses said support ring and the seal ring,
wherein said support ring has a function of supporting the tubular portion of said seal ring from an inner peripheral side thereof.

2. The sealing device according to claim 1, wherein said spring means is constructed by a rubber ring or a metal spring.

## Amended claims

### Amended claims under Art. 19.1 PCT

**1.** (Amended) A sealing device inhibiting a sealed subject from passing through an outer peripheral side of the sealing device from one side in an axial direction to the other so as to leak by being installed to an installation groove which is provided in an outer peripheral surface of one member among relatively moving two members and coming into close contact with the other member which is positioned in an outer peripheral side of said installation groove and one side wall of said installation groove, the sealing device comprising:
a seal ring which is provided with a diametrical portion in one end portion in an axial direction of a tubular portion toward an inner side in a diametrical direction, comes into close contact with one side wall of said installation groove by one end surface in an axial direction of said diametrical portion as well as coming into close contact with said other member by an outer peripheral surface of said tubular portion, and is made of a resin;
a support ring which is provided with a position coming into contact with an inner peripheral surface of said tubular portion and a position coming into contact with the other end surface in the axial direction of said diametrical portion, is combined with said seal ring and is constructed by a rigid member such as a metal; and
a spring means which presses said support ring and the seal ring,
wherein said support ring has a function of supporting the tubular portion of said seal ring from an inner peripheral side thereof.

**2.** The sealing device according to claim 1, wherein said spring means is constructed by a rubber ring or a metal spring.
